# FASCICULE DE BREVET EUROPEEN

(11) **EP 0 558 009 B1**
(45) Date de publication et mention de la délivrance du brevet: **08.05.1996**
(21) Numéro de dépôt: 93102984.7
(22) Date de dépôt: 25.02.1993
(51) Int. Cl.: A63C 5/12

(54) **Procédé de fabrication d'un ski**
Verfahren zur Herstellung eines Skis
Process of manufacturing a ski

(30) Priorité: 27.02.1992 FR 9202552
(43) Date de publication de la demande: 01.09.1993
(73) Titulaire: Salomon S.A., F-74370 Metz-Tessy (FR)
(72) Inventeur: Gagneux, Yves, F-74940 Annecy Le Vieux (FR); Cazaillon, Jean-Marie, F-74960 Cran Gevrier (FR)

(56) Documents cités:
- EP-A- 0 428 886
- EP-A- 0 428 887
- EP-A- 0 459 347
- AT-B- 374 371

## Description

La présente invention concerne un perfectionnement pour la fabrication des skis utilisés pour les sports d'hiver. Elle concerne également un procédé de fabrication d'éléments de renfort.

On connait déjà différents types de ski et il en existe de très nombreuses variantes. Ceux-ci sont constitués par une poutre de forme allongée dont l'extrémité avant est courbée vers le haut pour constituer une spatule, l'extrémité arrière l'étant aussi, mais plus légèrement, pour constituer le talon.

Les skis actuels ont généralement une structure composite dans laquelle sont combinés différents matériaux, de manière que chacun d'eux intervienne de façon optimale compte-tenu de la distribution des contraintes mécaniques lors de l'utilisation du ski. Ainsi, la structure comprend généralement des éléments de protection périphériques formant la face supérieure et souvent même les faces latérales du ski, des éléments internes de résistance ou lames de résistance, constitués en un matériau ayant une grande résistance et une grande raideur. La structure comprend également des éléments de remplissage tels qu'un noyau en structure alvéolaire, et une semelle de glissement formant la face inférieure du ski et assurant un bon glissement sur la neige. Ces éléments sont assemblés par collage ou par injection, l'assemblage s'effectuant généralement à chaud dans un moule présentant souvent la forme du ski. Lors de cet assemblage, les différents éléments sont disposés les uns après les autres dans le moule, et la manipulation de ceux-ci est délicate. Ceci est particulièrement vrai pour les couches de renfort non polymérisées ainsi que pour les films intervenants dans l'adhésion des éléments de renfort avec d'autres éléments de structure et qui n'ont que quelques dixièmes de millimètre d'épaisseur, et qui doivent être manipulées avec d'infinies précautions.

Le document EP-A1-428 886 concerne un procédé de fabrication d'un ski injecté qui consiste à former à chaud et sous pression un film et un sous-ensemble supérieur ; respectivement, inférieur, d'un ski, au cours d'une étape de préparation ; puis qui comprend une étape d'injection des constituants d'une mousse durcissable entre les deux sous-ensembles ainsi préparés. L'accostage du film est réalisé à chaud au moyen d'un moule. Le film est prédécoupé aux dimensions voulues et sa manipulation reste donc délicate.

Le document AT-B-374 371 concerne un procédé de réalisation d'un sous-ensemble entrant dans la composition d'un ski et qui comprend un élément de renfort assemblé à un élément de semelle ou de dessus, par l'intermédiaire d'un film de collage thermofusible. Le laminé ainsi formé n'est pas adapté pour le collage ultérieur sur une quelconque surface d'un élément de ski (Noyau, renfort, carre métallique...).

La présente invention veut résoudre ces inconvénients en permettant d'éviter la manipulation de renforts non polymérisés ou encore celle des films de fine épaisseur et fragiles. Pour cela, l'invention concerne un procédé de fabrication d'éléments de renfort destinés à entrer dans la composition d'un ski lors d'opérations ultérieures de fabrication, caractérisé en ce qu'il comprend les étapes successives suivantes :
- on déroule en continu une bande de matériau de renfort ;
- on applique en continu, sur l'une au moins des faces de ladite bande un film thermoplastique de collage ayant de bonne propriétés d'adhésion avec le matériau de renfort d'une part et avec le matériau avec lequel il est destiné à entrer en contact, ultérieurement lors de la fabrication du ski d'autre part ;
- on presse à chaud ledit film par des moyens de pressage pour obtenir l'adhésion du film sur la bande ;
- on découpe aux dimensions appropriées la bande ainsi recouverte par un outil de découpe de façon à obtenir une succession d'éléments de renfort prêts pour leur emploi ultérieur.

Les éléments de renfort ainsi obtenus par le procédé selon l'invention peuvent être manipulés, transportés et stockés facilement. Ils sont munis sur l'une au moins de leurs faces d'un film dit "compatibilisant" c'est-à-dire possédant des propriétés d'adhésion privilégiées avec les éléments avec lesquels il est destiné à entrer en contact dans les opérations ultérieures d'assemblage de la fabrication du ski.

L'invention concerne aussi un procédé de fabrication d'un ski qui comprend :
(a) une première étape de préparation d'éléments de renfort selon le procédé de fabrication précédemment décrit ;
(b) une seconde étape d'assemblage qui consiste à assembler en chauffant dans un moule les éléments suivants entre autres :
   - une semelle de glisse ;
   - des carres métalliques ;
   - des éléments de renfort inférieurs et supérieurs ; l'un au moins de ces éléments ayant été réalisé au cours de la première étape de préparation ;
   - un élément de protection et de décoration.

Ainsi, le film comprend un support solide qui est la couche de renfort, sur laquelle il adhère et devient ainsi facilement manipulable sans précautions particulières dans toutes les opérations ultérieures d'assemblage.

Selon une disposition particulière, le procédé consiste à assembler un sous-ensemble inférieur constitué d'une semelle de glisse, de carres métalliques et d'au moins un élément de renfort inférieur, et un sous-ensemble supérieur constitué d'un élément de protection et de décoration et d'au moins un élément de renfort supérieur, ainsi que d'un noyau.

Selon un mode d'exécution, on utilise, lors de l'assemblage, un élément de renfort et d'assemblage comprenant sur chacune de ses faces, un film solide de collage en matière thermoplastique.

Selon une caractéristique complémentaire, on utilise dans l'étape d'assemblage comme élément de renfort, une couche de tissu de verre ou de carbone ou kevlar imprégnée de résine thermoplastique ou thermodurcissable et complètement polymérisée pour être rigide et facilement manipulable.

Selon une autre caractéristique complémentaire, l'étape de préparation consiste à :
- faire passer la couche de tissu dans un bac d'imprégnation pour être imprégné de résine, puis ;
- appliquer un film de collage en matière thermoplastique sur l'une au moins des faces de ladite couche et à le faire adhérer en appliquant une pression et un chauffage suffisant, enfin ;
- à découper ladite couche ainsi recouverte par un outil de découpe aux dimensions appropriées à son utilisation pour constituer l'élément de renfort du ski.

Selon une autre caractéristique complémentaire, la polymérisation de la résine imprégnée est obtenue lors de l'opération de chauffage nécessaire à l'adhésion du film de collage sur ladite couche.

Selon une autre caractéristique complémentaire, la résine imprégnée est polymérisée par chauffage avant l'opération d'application du film de matière thermoplastique et l'adhésion est effectuée en appliquant un chauffage par une source additionnelle.

Bien entendu, l'invention concerne également les produits obtenus par ces procédés ; c'est-à-dire le ski en tant que produit final mais également l'élément de renfort en tant que produit intermédiaire.

D'autres caractéristiques et avantages de l'invention se dégageront de la description qui va suivre en regard des dessins annexés, qui ne sont donnés qu'à titre d'exemples non limitatifs.

La figure 1 est une vue latérale du ski selon l'invention.

La figure 2 est une coupe transversale selon T-T de la figure 1.

La figure 3 est une variante de la figure 2.

La figure 4 est une vue montrant les différents sous-ensembles constituant la structure du ski de la figure 3.

La figure 4a est une vue montrant à plus grande échelle un détail de construction de l'élément intermédiaire de renfort et d'assemblage.

La figure 5 illustre l'étape préalable du procédé selon l'invention.

La figure 6 montre en perspective l'élément de renfort et d'assemblage réalisé lors de l'étape préalable.

Les figures 7 à 8 illustrent l'étape principale d'assemblage du procédé.

Les figures 7a et 7b illustrent la première étape du procédé.

La figure 8 illustre l'étape principale d'assemblage proprement dite du procédé selon l'invention.

Les figures 9 et 10 illustrent des variantes de réalisation de l'élément de renfort et d'assemblage.

La figure 9a représente à plus grande échelle des détails de construction de la figure 9.

Les figures 11 à 16 illustrent une variante du procédé selon l'invention.

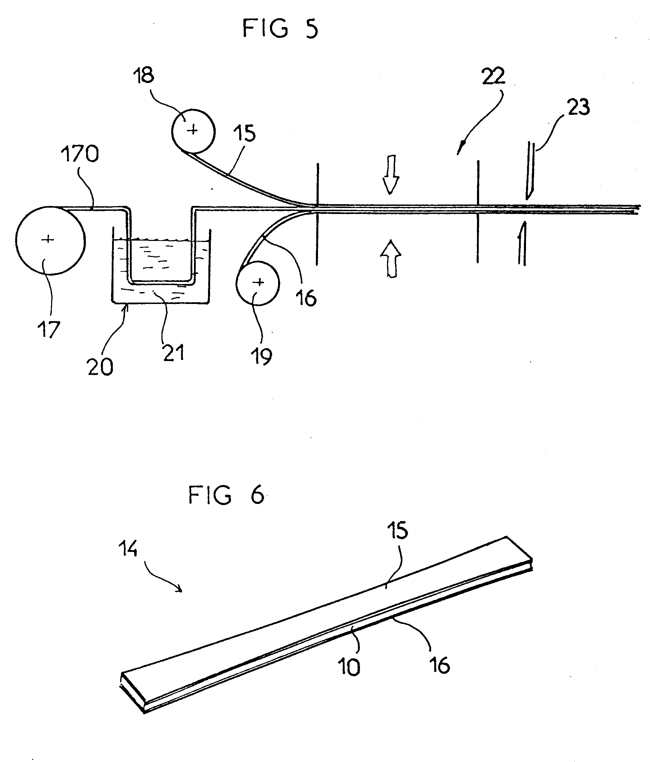

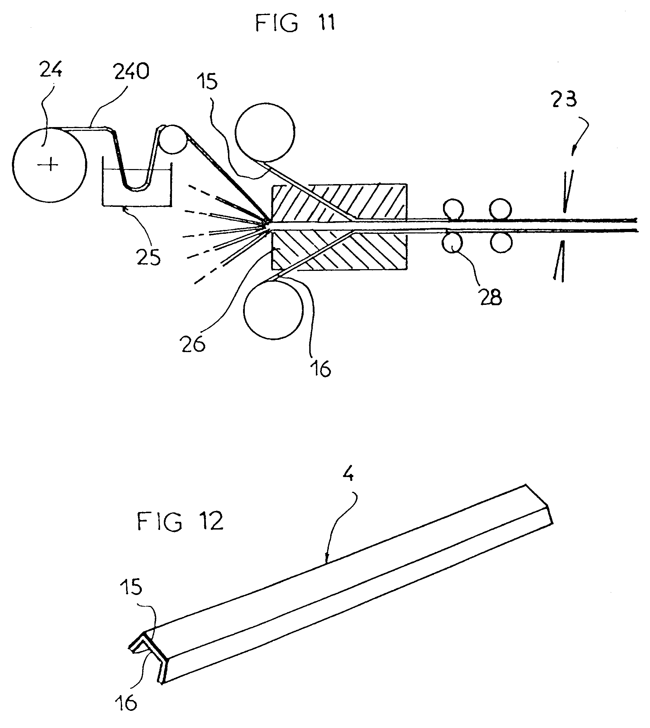

La figure 11 est une vue similaire à la figure 5 du procédé précédent.

La figure 12 est une vue similaire à la figure 6 du procédé précédent.

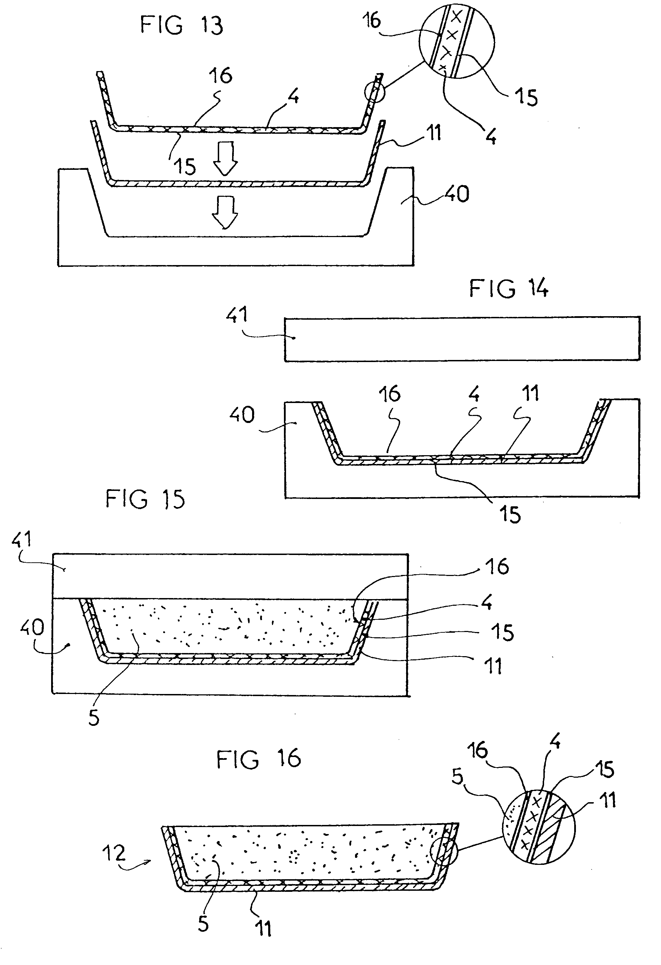

Les figures 13, 14, 15 et 16 illustrent les différentes étapes successives du procédé selon la variante.

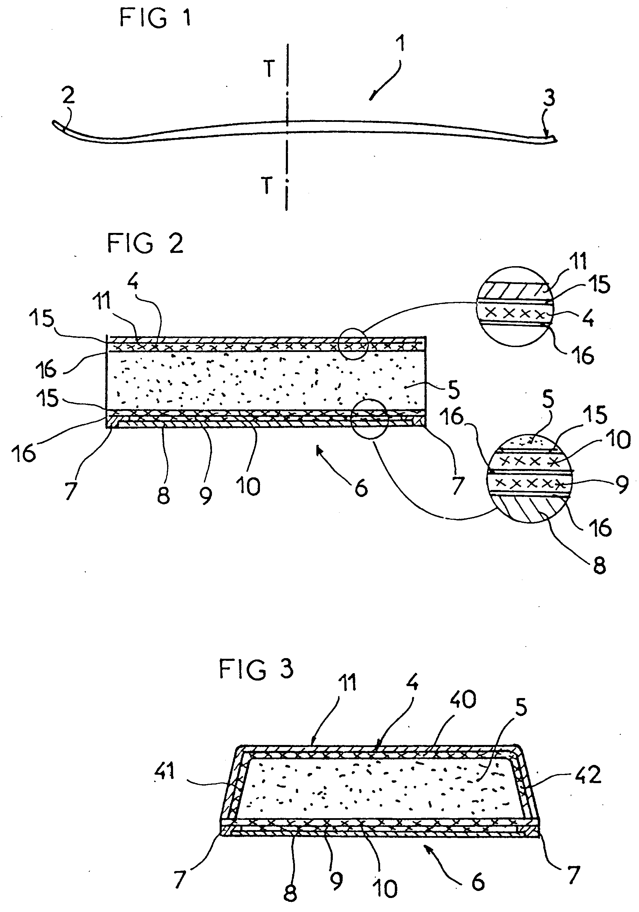

Le ski représenté à la figure 1 et fabriqué selon le procédé de l'invention, est constitué par une poutre (1) de forme allongée comprenant de façon connue en sol, à l'avant, une zone relevée constituant la spatule (2) et à l'arrière, une partie légèrement relevée constituant le talon (3). La structure du ski peut être du type sandwich avec par exemple des lames de flexion parallèles et disposées de part et d'autre d'un noyau, ou du type à caisson avec lame de résistance enveloppant le noyau sur les quatre faces, ou de tout autre type.

A la figure 2, on a représenté un exemple de structure de type "sandwich" d'un ski selon l'invention. Il comprend notamment un noyau (5) disposé entre un élément de renfort inférieur (10) rigide et un élément de renfort supérieur (4) rigide également, une semelle de glissement (8), des carres métalliques (7) et une couche superficielle (11) recouvrant le renfort supérieur pour former le décor du ski. Le ski comprenant par ailleurs un deuxième élément de renfort inférieur (9).

Selon l'invention, le ski est fabriqué par un procédé de moulage au cours duquel lors de l'étape consistant à disposer les éléments dans le moule, l'un au moins des renforts comprend déjà sur l'une au moins de ses faces et avantageusement sur ses deux faces, un film solide thermoplastique qui lui est solidaire. Par exemple et comme le montre la figure 2, des éléments de renfort inférieur (9, 10) et des éléments de renfort supérieur (4) sont tels que chacune des faces est recouverte d'un film solide (15, 16) préalablement à l'opération d'assemblage et moulage des éléments, pour former le ski fini.

Les couches de renfort (4, 9, 10) peuvent être de tous types tels que des couches de matériaux composites comme de la fibre de verre, fibre de carbone avec de la résine époxy ou polyester ou une couche en métal ou en alliage métallique.

Le noyau (5) peut être de la mousse chargée ou non, du bois ou du nid d'abeille métallique ou en plastique. L'opération d'assemblage et de moulage peut consister, entre autre, à obtenir l'adhésion des éléments de renfort inférieur (9, 10), l'élément de renfort supérieur (4) avec le noyau (5) par injection des constituants d'une mousse s'expansant "in situ" pour réaliser le noyau (5). La réaction exothermique de la mousse contribue à réactiver les films (15, 16) pour promouvoir l'adhérence entre les films et la mousse (5). Si nécessaire, un complément d'apport de chaleur est assuré de l'extérieur pour échauffer l'ensemble pendant une durée et selon une température suffisante pour assurer un collage parfait de tous les éléments entre eux.

La couche superficielle (11), monocouche ou multicouche assurant le décor peut être en polyamide, en acrylonitrile-butadiène-styrène ou autre, tel qu'en matériau thermoplastique.

A la figure 3, on a représenté un autre exemple de structure comprenant un renfort supérieur (4) rigide, en forme de coque à section en "U" renversé formant une paroi supérieure (40) et deux parois latérales (41, 42) recouvrant un noyau (5), l'ensemble étant fermé à sa partie inférieure par un ensemble inférieur (6) comportant les carres métalliques (7), une couche (8) de glissement généralement en polyéthylène ainsi que des éléments de renfort inférieur (9, 10). Une couche supérieure superficielle (11) recouvre le renfort supérieur pour former le décor du ski.

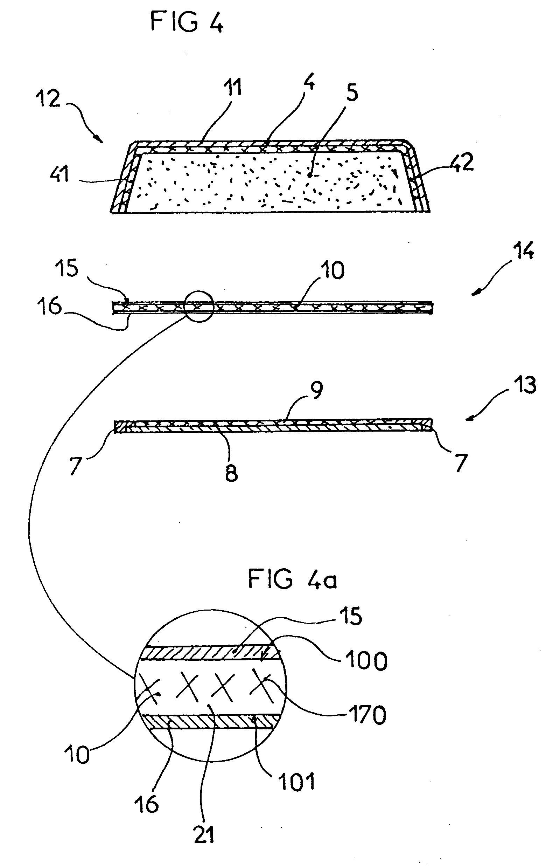

Dans l'exemple des figures 3 et 4, le ski est constitué par un assemblage de deux sous-ensembles : un sous-ensemble supérieur (12) et un sous-ensemble inférieur (13). L'assemblage étant réalisé selon l'invention grâce à un ensemble intermédiaire de renfort et d'assemblage (14).

Le sous-ensemble supérieur (12) comprend par exemple le noyau (5) recouvert de sa couche de renfort (4), puis de la couche superficielle (11), tandis que le sous-ensemble inférieur (13) comprend la couche de glissement (8), les carres métalliques (7) et la couche de renfort inférieure (9).

L'ensemble de renfort et d'assemblage (14) est constitué d'une couche de renfort (10) comprenant à sa surface supérieure (100) un film supérieur (15) et à sa surface inférieure (101), un film thermoplastique inférieur (16). La couche de renfort (10) est par exemple une couche de tissu de verre, de carbone ou de Kevlar® imprégnée d'une résine thermoplastique ou thermodurcissable, tandis que les films inférieur (16) et supérieur (15) sont des couches de matière plastique à base de polymère(s) ou copolymère(s) greffé(s). On peut avantageusement utiliser des films de polymère(s) ou copolymère(s) greffé(s) par action d'acide carboxylique, d'anhydride d'acide carboxylique, ou d'ester d'acide carboxylique, par exemple par l'acide acrylique, par l'acide méthacrylique ou par l'acide maléique. Le film peut notamment être réalisé en polyéthylène greffé, par exemple en polyéthylène greffé par l'anhydride maléique. Le film peut aussi être constitué d'un copolymère d'éthylène et d'acétate de vinyle (EVA) greffé par action d'acide carboxylique ou d'anhydride d'acide carboxylique. Pour certaines applications particulières, il peut être avantageux d'utiliser certains films à base de polymères choisis parmi les ABS, les polyamides aliphatiques et les polyamides élastomères de la famille de polyether bloc-amide (type PBA). Le choix des films est fonction de leur compatibilité de collage avec la nature des éléments du ski à assembler. Bien entendu, la nature des films est identique dans l'exemple donné pour un ski de type "sandwich", comme on l'a dit précédemment.

Les éléments de renfort (4, 9, 10) de l'exemple de la figure 2 et l'ensemble de renfort et d'assemblage (14) de l'exemple des figures 3 et 4 sont mis en oeuvre lors d'une étape préalable pendant laquelle est solidarisé par plaquage à chaud sur chaque surface (100, 101) de la couche de renfort (10), les films (15, 16). Le plaquage à chaud peut se faire en continu.

Le dispositif donné à titre d'exemple à la figure 5 et destiné à préparer l'élément de renfort, comprend un rouleau (17) de tissu de verre (170), deux rouleaux (18, 19) de film thermoplastique, un bac d'imprégnation (20) comprenant la résine (21), suivi d'une presse chauffante (22). Ainsi, dans l'étape préalable, la couche de tissu de verre (170) passe tout d'abord dans le bac d'imprégnation (20) pour être imprégnée de résine (21). Avant son passage dans la presse, la couche de tissu de verre imprégnée (170) reçoit sur sa face supérieure, un film supérieur (15) et sur sa face inférieure, un film inférieur (16), et la presse chauffante assure d'une part la polymérisation de la résine (21) imprégnée, et d'autre part, l'adhésion des deux films (15, 16). A la sortie de la presse chauffante, il en ressort une bande de renfort qui est polymérisée c'est-à-dire solide et relativement rigide et qui est ensuite découpée aux dimensions appropriées à son utilisation pour constituer l'élément de renfort du ski (4, 9, 10, 14). Le découpage se faisant par un outil de découpe (23).

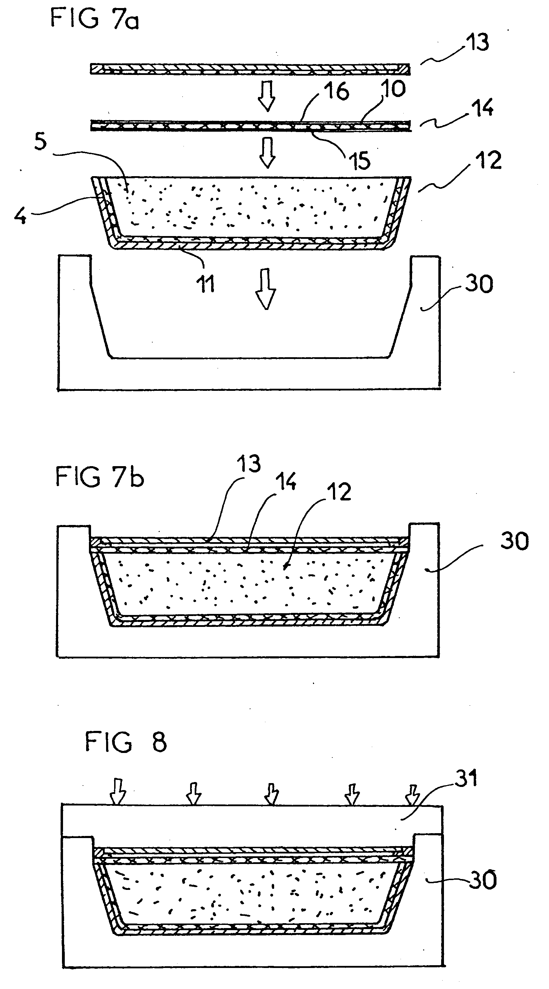

Les figures 7 et 8 illustrent l'étape principale de moulage proprement dit du procédé, appliqué à l'exemple des figures 3 et 3a, qui consiste dans une première étape (figures 7a et 7b), à mettre en place les différents sous-ensembles dans le moule (30) et dans une deuxième étape (figure 7), le moule (30) est ensuite fermé par un couvercle (31), mis sous pression et chauffé de façon traditionnelle, le ski étant ensuite retiré du moule.

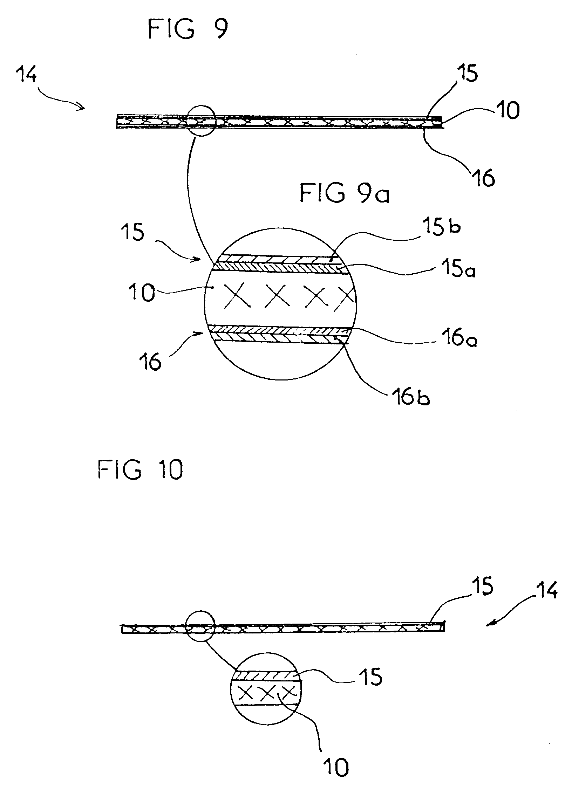

Il va de soi que le film peut être du type monocouche ou multicouche, comme cela est représenté à la figure 9. Selon cette variante, le multicouche comprend une première couche (15a, 16a) formant la face d'assemblage avec le renfort (10) et une deuxième couche (15b, 16b) formant la face d'assemblage avec les sous-ensembles supérieur (12) et inférieur (13). A titre d'exemple, on peut utiliser un film bicouche d'épaisseur 150 microns, constitué de deux couches de polyether-bloc-amide (PBA) de rhéologies différentes. Ainsi, la couche (15a) peut être un film en PEBAX® 3533 et la couche (15b), un film en PEBAX® 4533.

La figure 10 illustre une variante de réalisation dans laquelle l'élément de renfort comprend une seule couche de renfort (10) comprenant un seul film monocouche en thermoplastique (15).

Dans le cas d'un élément de renfort en forme par exemple de U renversé, comme l'élément de renfort (40) de la figure 3 d'un ski de type caisson, on peut prévoir de réaliser le renfort par un procédé de pultrusion. A la figure 11 est illustré le dispositif permettant de réaliser l'élément de renfort par le procédé de pultrusion. Il comprend plusieurs rouleaux (24) de fils continus de verre (240), lesquels sont imprégnés dans un bain de résine (25), puis introduits dans une filière (26) dont la section d'entrée a la forme de la section du renfort à réaliser. La filière est chauffée de façon à assurer la polymérisation de la résine. Avant la sortie de filière et avant refroidissement complet de la résine, un film solide thermoplastique (15, 16) est plaqué sur chacune des faces de renfort (27). Comme le dispositif de la figure 5, un outil de découpe (29) est prévu en fin de fabrication.

La figure 12 illustre un exemple d'élément de renfort (4) ainsi réalisé
Les figures 13 à 16 illustrent à titre d'exemple, l'étape préalable de moulage du sous-ensemble supérieur (12) intervenant dans l'étape principale de moulage des figures 6 et 7.

Dans un premier temps, l'élément de protection et décoration (11), puis l'élément de renfort (4) sont mis en place dans la première partie (40) d'un moule, comme le montre la figure 13. La seconde partie (41) du moule est disposée sur la première, puis le noyau (5) est injecté dans l'espace ainsi formé par l'assemblage des parties de moule, comme le montre la figure 15. La solidarisation du renfort sur la noyau (15) et l'élément de protection et décoration (11) est assuré par chauffage dans le moule.

Enfin, après refroidissement, le sous-ensemble supérieur (12) ainsi formé est démoulé comme le montre la figure 16.

Les couches de renfort peuvent être de toute nature et notamment métalliques, et par exemple en aluminium.

Bien entendu l'invention n'est pas limitée aux modes de réalisation décrits et représentés à titre d'exemples, mais elle comprend aussi tous les équivalents techniques ainsi que leurs combinaisons et d'autres variantes dans le cadre des revendications.

## Revendications

1. Procédé de fabrication d'éléments de renfort destinés à entrer dans la composition d'un ski lors d'opérations ultérieures de fabrication, comprenant les étapes successives suivantes :
- on déroule en continu une bande de matériau de renfort (170) ;
- on applique en continu, sur l'une au moins des faces de ladite bande un film thermoplastique de collage (15, 16) ayant de bonne propriétés d'adhésion avec le matériau de renfort d'une part et avec le matériau avec lequel il est destiné à entrer en contact, ultérieurement lors de la fabrication du ski d'autre part ;
- on presse à chaud ledit film (15, 16) par des moyens de pressage (22) pour obtenir l'adhésion du film (15, 16) sur la bande (170) ;
- on découpe aux dimensions appropriées la bande (170, 15, 16) ainsi recouverte par un outil de découpe (23) de façon à obtenir une succession d'éléments de renfort (4, 9, 10, 14) prêts pour leur emploi ultérieur.

2. Procédé de fabrication d'un ski comprenant :
(a) une première étape de préparation d'éléments de renfort selon le procédé de fabrication de la revendication 1 ;
(b) une seconde étape d'assemblage qui consiste à assembler en chauffant dans un moule les éléments suivants entre autres :
- une semelle de glisse (8) ;
- des carres métalliques (7) ;
- des éléments de renfort inférieurs (9, 10) et supérieurs (4) ; l'un au moins de ces éléments ayant été réalisé au cours de la première étape de préparation ;
- un élément de protection et de décoration (11).

3. Procédé de fabrication selon la revendication 2 ,caractérisé en ce que l'on dispose dans le moule,
- la semelle de glisse (8), les carres (7) et éventuellement un ou plusieurs éléments de renfort inférieur(s) constituant un premier sous-ensemble inférieur (13) pré-assemblé; et
- l'élément de protection et de décoration (11) et le (les) élément(s) de renfort supérieur(s) (4) constituant un second sous-ensemble supérieur (12) pré-assemblé; et
- un élément de renfort et d'assemblage (14) entre le premier et le second sous-ensemble, constitué par une couche de renfort (10) comprenant sur l'une de ses faces au moins, le film solide thermoplastique (15, 16).

4. Procédé selon la revendication 2 caractérisé en ce que l'on utilise, lors de l'assemblage, un élément de renfort et d'assemblage (14) comprenant sur chacune de ses faces, un film solide de matière thermoplastique (15, 16).

5. Procédé selon l'une quelconque des revendications précédentes, caractérisé en ce que l'on utilise dans l'étape d'assemblage comme élément de renfort (4, 9, 10, 14), une couche (170) de tissu de verre ou de carbone ou kevlar imprégnée de résine (21) thermoplastique ou thermodurcissable et complètement polymérisée pour être rigide et facilement manipulable.

6. Procédé selon l'une des revendications précédentes, caractérisé en ce que l'étape de préparation consiste à :
- faire passer la couche (170) de tissu dans un bac d'imprégnation (20) pour être imprégné de résine (21), puis ;
- appliquer un film de matière thermoplastique (15, 16) sur l'une au moins des faces de ladite couche (170) et à le faire adhérer en appliquant une pression et un chauffage suffisant, enfin ;
- à découper ladite couche (170) ainsi recouverte par un outil de découpe (23) aux dimensions appropriées à son utilisation pour constituer l'élément de renfort du ski.

7. Procédé selon la revendication 6, caractérisé en ce que la polymérisation de la résine imprégnée est obtenue lors de l'opération de chauffage nécessaire à l'adhésion du film de collage sur ladite couche.

8. Procédé selon la revendication 6, caractérisé en ce que la résine imprégnée est polymérisée par chauffage avant l'opération d'application du film de collage en matière thermoplastique et l'adhésion est effectuée en appliquant un chauffage par une source additionnelle.

9. Procédé selon l'une quelconque des revendications 2 à 4, caractérisé en ce qu'on utilise, dans l'étape d'assemblage, comme élément de renfort (4, 9, 10, 14) une couche en métal ou alliage métallique.

10. Procédé selon l'une quelconque des revendications précédentes, caractérisé en ce que l'on utilise un film (15, 16) de collage à base de polymère ou copolymère greffé par action d'acide carboxylique, d'anhydride d'acide carboxylique ou d'ester d'acide carboxylique.

11. Procédé selon l'une des revendications précédentes, caractérisé en ce que l'on utilise un film (15, 16) de collage à base de polymère ou copolymère greffé par action d'acide acrylique.

12. Procédé selon l'une des revendications précédentes, caractérisé en ce que l'on utilise un film (15, 16) de collage à base de polymère ou copolymère greffé par action d'acide métacrylique.

13. Procédé selon l'une des revendications précédentes, caractérisé en ce que l'on utilise un film (15, 16) de collage à base de polymère ou copolymère greffé par action d'anhydride d'acide maléique.

14. Procédé selon l'une des revendications précédentes, caractérisé en ce que l'on utilise un film (15, 16) de collage à base de polymère ou copolymère greffé par combinaison d'acide acrylique et/ou d'acide métacrylique et/ou d'anhydride maléique.

15. Procédé selon l'une quelconque des revendications 10 à 14, caractérisé en ce que le film de collage à base polymère est en polyéthylène.

16. Procédé selon l'une quelconque des revendications 10 à 14, caractérisé en ce que le film de collage est à base de copolymère d'éthylène et d'acétate de vinyle.

17. Procédé selon l'une quelconque des revendications 1 à 9, caractérisé en ce que l'on utilise un film (15, 16) de collage à base de polymère choisi parmi les ABS, les polyamides aliphatiques et les polyamides élastomères type PBA.

18. Procédé selon l'une quelconque des revendications précédentes, caractérisé en ce que le film (15, 16) est du type monocouche.

19. Procédé selon l'une quelconque des revendications précédentes, caractérisé en ce que le film (15, 16) de collage est du type multicouche comportant au moins une première couche (15a, 16a) formant la face de collage avec le renfort et une deuxième couche (15b, 16b) formant la face d'assemblage avec les sous-ensembles.

20. Procédé selon la revendication 3, caractérisé en ce que l'étape préalable de réalisation du sous-ensemble supérieur (12) consiste aux étapes successives suivantes :
- on réalise un élément de renfort (4) en forme de U renversé, par pultrusion et plaquage à chaud sur chaque face de renfort (27) d'un film solide thermoplastique (15, 16),
- on dispose dans une premier partie (40) d'un moule, l'élément de protection et de décoration (11), puis l'élément de renfort (4),
- on dispose la seconde partie (41) du moule sur la première et l'on injecte dans l'espace ainsi formé, le noyau (5),
- on chauffe le moule de façon à réaliser la solidarisation des éléments entre eux, et enfin
- on laisse refroidir et on démoule le sous-ensemble supérieur (12).

## Claims

1. Process of Manufacturing reinforcement elements adapted to enter into the composition of a ski during further manufacturing processes, comprising the following success of steps:
one continuously unrolls a strip of reinforcement material (170);
one continuously applies, over at least one of the surfaces of the said strip a thermoplastic gluing film (15, 16) having good adhesive properties with the reinforcement material on the one hand and with the material with which it is adapted to enter into contact, ultimately during manufacture of the ski in the other hand;
one hot presses the said film (15, 16) by pressing means (22) to obtain the adhesion of the film (15, 16) on the strip (170);
one cuts away to the appropriate dimensions the strip (170, 15, 16) thus covered by a cutting tool (23) in a manner so as to obtain a succession or reinforcement elements (4, 9, 10, 14) ready for their further use.

2. Process of manufacturing a ski comprising;
(a) a first step of preparing the reinforcement elements according to the manufacturing process of claim 1;
(b) a second step of assembly which comprises assembling while heating in a mold the following elements amongst others:
a gliding sole (8);
metallic running edges (7);
lower reinforcement elements (9, 10) and upper reinforcement elements (4); at least one of these elements having been formed in the course of the first step of preparation;
a protective and decorative element (11).

3. Process of manufacturing according to claim 2, characterized in that one positions in the mold,
the gliding sole (8), the running edges (7) and possibly one or more lower reinforcement element(s) constituting a first pre-assembled lower sub-assembly (13); and
the protective and decorative element (11) and the one or more upper reinforcement element(s) (4) constituting a second pre-assembled upper sub-assembly (12); and
an element for reinforcement and assembly (14) between the first and the second sub-assembly, constituted by a reinforcement layer (10) comprising on at least one of its surfaces, the solid thermoplastic film (15, 16).

4. Process according to claim 2 characterized in that one utilizes, during assembly, an element for reinforcement and assembly (14) comprising on each of its surfaces, a solid film of thermoplastic material (15, 16).

5. Process according to any one of the preceding claims, characterized in that one utilizes in the assembly step as a reinforcement element (4, 9, 10, 14), a layer (170) of fiber of glass or carbon or kevlar impregnated with thermoplastic or thermosetting resin (21) and completely polymerized to be rigid and easily manipulable.

6. Process according to one of the preceding claims, characterized in that the preparation step comprises:
passing the layer (170) of fiber in an impregnation bath (20) to be impregnated with resin (21), then;
applying a film of thermoplastic material (15, 16) on at least one of the surfaces of the said layer (170) and to make it adhere by applying sufficient pressure and heating, then;
cutting away the said layer (170) thus covered by a cutting tool (23) to the dimensions appropriate for its use to constitute the reinforcement element of the ski.

7. Process according to claim 6, characterized in that the polymerization of the impregnated resin is obtained during the heating operation necessary for the adhesion of the glue film on the said layer.

8. Process according to claim 6, characterized in that the impregnated resin is polymerized by heating before the application operation of the gluing film of thermoplastic material and the adhesion is performed by applying heat by means of an additional source.

9. Process according to any one of claims 2-4, characterized in that one utilizes, in the assembly step, as a reinforcement element (4, 9, 10, 14) a layer of metal or metal alloy.

10. Process according to any one of the preceding claims, characterized in that one utilizes a gluing film (15, 16) having a polymer- or copolymer-base grafted by carboxylic acid, carboxylic acid anhydride or carboxylic acid ester.

11. Process according to one of the preceding claims, characterized in that one utilizes a gluing film (15, 16) having a polymer- or a copolymer-base grafted by acrylic acid.

12. Process according to one of the preceding claims, characterized in that one utilizes a gluing film (15, 16) having a polymer- or a copolymer-base grafted by metacrylic acid.

13. Process according to one of the preceding claims, characterized in that one utilizes a gluing film (15, 16) having a polymer- or copolymer-base grafted by maleic acid anhydride.

14. Process according to one of the preceding claims, characterized in that one utilizes a gluing film (15, 16) having a polymer- or copolymer-base grafted by a combination of acrylic acid and/or metacrylic acid and/or maleic anhydride.

15. Process according to any one of claims 10-14, characterized in that the polymer-base gluing film is made of polyethylene.

16. Process according to any one of claims 10-14, characterized in that the gluing film is an ethylene vinyl acetate copolymer base.

17. Process according to any one of claims 1-9, characterized in that one utilizes a polymer-base gluing film (15, 16) selected from ABS, aliphatics, polyamides and polyamides elastomers of PBA type.

18. Process according to any one of preceding claims, characterized in that the gluing film (15, 16) is of the monolayer type.

19. Process according to any one of the preceding claims, characterized in that the gluing film (15, 16) is of the multilayer type comprising at least one first layer (15a, 16a) forming the gluing surface with the reinforcement and a second layer (15b, 16b) forming the assembly surface with the sub-assemblies.

20. Process according to claim 3, characterized in that the preliminary step of forming the upper sub-assembly (12) comprises the following successive steps:
one forms a reinforcement element (4) in the form of an inverted U, by pultrusion and hot plating on each reinforcement surface (27) of a solid thermoplastic film (15, 16),
one positions in a first portion (40) of a mold, the protective and decorative element (11), then the reinforcement element (4),
one positions the second portion (41) of the mold on the first and injects the core (5) into the space thus formed,
one heats the mold in a manner so as to unite the elements to one another, and finally,
one lets the upper sub-assembly (12) cool off and removes it from the mold.

## Patentansprüche

1. Verfahren zur Herstellung von Verstärkungselementen, die dazu bestimmt sind, in die Zusammensetzung eines Ski bei den späteren Herstellungs-Arbeitsschritten eingesetzt zu werden, das die folgenden aufeinanderfolgenden Schritte aufweist:
- man entrollt kontinuierlich ein Verstärkungsmaterialband (170);
- man bringt kontinuierlich auf zumindest einer der Seiten des Bandes einen thermoplastischen Klebefilm (15, 16) auf der gute Hafteigenschaften mit dem Verstärkungsmaterial zum einen und zum anderen mit dem Material aufweist, mit dem es später bei der Herstellung des Ski in Kontakt kommen soll;
- man preßt den Film (15, 16) bei Wärme durch eine Preßeinrichtung (22), um die Haftung des Films (15, 16) auf dem Band (71) zu erhalten;
- man schneidet das so überdeckte Band (170, 15, 16) mit einem Schneidewerkzeug (23) in geeignete Ausmaße, um eine Folge von Verstärkungselementen (4, 9, 10, 14) zu erhalten, die bereit für ihre spätere Anwendung sind.

2. Herstellungsverfahren für einen Ski, das aufweist:
(a) einen ersten Schritt der Vorbereitung der Verstärkungselemente gemäß dem Herstellungsverfahren des Anspruches 1;
(b) einen zweiten Schritt des Zusammenfügens, der darin besteht, unter anderem die folgenden Elemente durch Erwärmen in einer Form zusammenzufügen,
- eine Gleitsohle (8);
- metallische Kantenleisten (7);
- untere (9, 10) und obere (4) Verstärkungselemente, wobei zumindest eines dieser Elemente im Verlauf des ersten Vorbereitungsschrittes hergestellt worden ist;
- ein Element zum Schutz und zur Dekoration (11).

3. Verfahren zur Herstellung gemäß Anspruch 2, dadurch gekennzeichnet, daß man in der Form anordnet:
- die Gleitsohle (8), die Kantenleisten (7) und evtl. eines oder mehrere untere Verstärkungselemente, die eine erste vormontierte untere Untereinheit (13) bilden; und
- das Element zum Schutz und zur Dekoration (11) und das (die) obere(n) Verstärkungselement(e) (4), das eine zweite obere vormontierte Untereinheit (12) bildet; und
- ein Element zur Verstärkung und zum Zusammenfügen (14) zwischen der ersten und der zweiten Untereinheit, das durch eine Verstärkungsschicht (10) gebildet ist, die zumindest auf einer ihrer Seiten den festen thermoplastischen Film (15, 16) aufweist.

4. Verfahren gemäß Anspruch 2, dadurch gekennzeichnet, daß man bei dem Zusammenfügen ein Element zur Verstärkung und zum Zusammenfügen (14) verwendet, das auf jeder seiner Seiten einen festen Film aus thermoplastischem Material (15, 16) aufweist.

5. Verfahren gemäß einem der vorangehenden Ansprüche, dadurch gekennzeichnet, daß man bei dem Schritt des Zusammenfügens als Verstärkungselement (4, 9, 10, 14) eine Schicht (170) aus einem Gewebe aus Glasfasern oder Kohlenstoff oder Kevlar verwendet, das mit einem thermoplastischen oder wärmehärtbaren Harz (21) imprägniert ist, das vollständig polymerisiert ist, damit es steif und leicht handhabbar ist.

6. Verfahren gemäß einem der vorangehenden Ansprüche, dadurch gekennzeichnet, daß der Vorbereitungschritt darin besteht:
- die Schicht (170) aus Gewebe in einer Imprägnierungswanne (20) durchlaufen zu lassen, damit es mit Harz (21) imprägniert ist, dann
- einen Film aus thermoplastischem Material (15, 16) auf zumindest einer der Seiten der Schicht (170) aufzubringen und ihn dort anhaften zu lassen, indem Druck und eine ausreichende Erhitzung angewandt werden, schließlich
- die Schicht (170), die so überdeckt ist, mit einem Schneidwerkzeug (320) in für ihre Benutzung geeignete Abmessungen zu schneiden, um das Verstärkungselement des Ski zu bilden.

7. Verfahren gemäß Anspruch 6, dadurch gekennzeichnet, daß die Polymerisation des imprägnierten Harzes bei dem Arbeitsschritt des Erhitzens erhalten wird, der für die Haftung des Klebefilmes auf der Schicht notwendig ist.

8. Verfahren gemäß Anspruch 6, dadurch gekennzeichnet, daß das imprägnierte Harz durch Erhitzen vor dem Arbeitsschritt des Aufbringens des Klebefilmes aus thermoplastischem Material polymerisiert ist und daß die Haftung dadurch geschieht, daß eine Erhitzung durch eine zusätzliche Quelle angewandt wird.

9. Verfahren nach einem der Ansprüche 2 bis 4, dadurch gekennzeichnet, daß man bei dem Schritt des Zusammenfügens eine Schicht aus Metall oder einer metallischen Legierung als Verstärkungselement (4, 9, 10, 14) benutzt.

10. Verfahren gemäß einem der vorangehenden Ansprüche, dadurch gekennzeichnet, daß man einen Klebefilm (15, 16) auf der Basis von Polymer oder einem durch Wirkung einer Carbonsäure, eines Anhydris einer Carbonsäure oder eines Carbonsäureesters veredelten Copolymers verwendet.

11. Verfahren gemäß einem der vorangehenden Ansprüche, dadurch gekennzeichnet, daß man einen Klebefilm (15, 16) auf der Basis von Polymer oder einem durch Wirkung von Acrylsäure veredelten Copolymer verwendet.

12. Verfahren gemäß einem der vorangehenden Ansprüche, dadurch gekennzeichnet, daß man einen Klebefilm (15, 16) auf der Basis von Polymer oder einem durch Wirkung von Metacrylsäure veredelten Copolymers benutzt.

13. Verfahren gemäß einem der vorangehenden Ansprüche, dadurch gekennzeichnet, daß man einen Klebefilm (15, 16) auf der Basis von Polymer oder einem durch Wirkung eines Maleinsäureanhydrid veredelten Polymers benutzt.

14. Verfahren gemäß einem der vorangehenden Ansprüche dadurch gekennzeichnet, daß man einen Klebefilm (15, 16) auf der Basis von Polymer oder einem durch eine Kombination einer Acrylsäure und/oder einer Metacrylsäure und/oder einem Maleinanhydrid veredelten Polymers benutzt.

15. Verfahren gemäß einem der Ansprüche 10 bis 14, dadurch gekennzeichnet, daß der Klebefilm auf der Basis von Polymer ein Polyethylen ist.

16. Verfahren gemäß einem der Ansprüche 10 bis 14, dadurch gekennzeichnet, daß der Klebefilm auf einem Copolymer aus Ethylen und Vinylacetat basiert.

17. Verfahren gemäß einem der Ansprüche 1 bis 9, dadurch gekennzeichnet, daß man einen Klebefilm (15, 16) auf der Basis eines Polymer benutzt, das aus ABS, den aliphatischen Polyamiden und elastomeren Polyamiden vom Typ PBA gewählt ist.

18. Verfahren gemäß einem der vorangehenden Ansprüche, dadurch gekennzeichnet, daß der Film (15, 16) vom einschichtigen Typ ist.

19. Verfahren gemäß einem der vorangehenden Ansprüche, dadurch gekennzeichnet, daß der Klebefilm (15, 16) vom vielschichtigen Typ ist, der zumindest eine erste Schicht (15a, 16a) aufweist, die die Klebeseite mit der Verstärkung bildet und eine zweite Schicht (15b, 16b), die die Seite des Zusammenfügens mit den Untereinheiten bildet.

20. Verfahren gemäß Anspruch 3, dadurch gekennzeichnet, daß der Schritt vor der Herstellung der oberen Untereinheit (12) aus den folgenden aufeinanderfolgenden Schritten besteht:
- man steht ein Verstärkungselement (4) in Form eines umgekehrten U durch Pultrusion und Heißplatieren auf jeder Verstärkungsseite (27) eines festen thermoplastischen Filmes (15, 16) her,
- man ordnet in einem ersten Abschnitt (40) einer Form das Element zum Schutz und zur Dekoration (11) und dann das Verstärkungselement (4) an,
- man ordnet einen zweiten Abschnitt (41) der Form auf dem ersten an und man spritzt in den so gebildeten Raum den Kern (11) ein,
- man erhitzt die Form, um die Verbindung der Elemente untereinander zu realisieren, und schließlich
- läßt man abkühlen und entformt die obere Untereinheit (12).
